# EUROPEAN PATENT APPLICATION

(11) **EP 1 755 022 A1**
(43) Date of publication of application: **21.02.2007**
(21) Application number: 05107148.8
(22) Date of filing: 03.08.2005
(51) Int. Cl.: G06F 3/033

(54) **Method for selecting objects on a display with light detectors**

(71) Applicant: Thomson Licensing, 92100 Boulogne-Billancourt (FR)
(72) Inventor: Schwanenberger, Thomas, 78112, St. Georgen (DE); Schemmann, Heinrich, 78048, Villingen-Schwenningen (DE); Marx, Thilo, 78052, Villingen-Schwenningen (DE)
(74) Representative: Rossmanith, Manfred

(57) **Abstract**

A method for selecting objects (16) displayed on a display (11) is suggested, wherein the display (11) has pixels arranged in rows and columns for reproducing images of the objects that can be selected, and wherein light detecting means (6) are associated with each pixel or groups of pixels. The method includes the steps of displaying selectable objects (16) by accordingly controlling individual or groups of pixels and determining a reference map of the incident light for one or groups of the light detecting means (6). Once a reference map is determined temporary differences from the reference map in the incident light are detected for one or groups of the light detecting means (6). The detected temporary differences are located with reference to the position of the light detecting means (6) within the arrangement of rows and columns of the pixels. The thus located temporary differences in the incident light are referred to images of selectable objects (16) displayed on the display (11), and the temporary difference referred to a selectable object (16) is interpreted as a selection of the object. Eventually, a signal indicating the selection of the selectable object is issued.

## Description

The invention refers to a method for selecting objects on a display with light detectors and an according display. Displays that are apt to be used with the method are, e.g., LCD displays or, in particular, OLED displays.

OLED displays are sometimes combined with photodiodes in order to compensate for ageing of the OLED element. Photodiodes may be assigned with one or more OLED elements of each primary colour or with groups of OLED elements of different primary colours.

Displays, in particular flat displays such as LCD displays or OLED displays, are often combined with means for selecting objects reproduced on the display. The means comprise various implementations of touch screens, e.g., resistive or capacitive touch screens. These touch screens are produced by applying a transparent touch screen layer on top of the display area. This additional layer, however, reduces the light emitted from the display.

It is, therefore, desirable to provide a method for turning the display including light detecting means into a display that allows for selecting objects reproduced on the display without relying on additional touch screens.

The method as defined in claim one provides a method for selecting objects displayed on a display that is equipped with light detectors. The resulting display as claimed in claim 7, which uses the method, does not suffer from reduced light emission.

The method advantageously makes use of the photodiodes assigned to single or groups of OLED elements. Objects coming close to the surface of the display influence the amount of light that is received by the light detectors of the display. The influence may either be a reduction of the light incident on the detectors or an increase in the amount of light falling on the photo detectors. In the first case, the reduction is caused by the shade of the object coming close to the surface of the display. In the second case, the increase of light falling onto the photo detectors is caused by the object coming close to the surface of the display reflecting the light emitted by the display. In both cases, a reference map of the amount of light falling onto the photo detectors of the display is created. In order to make the following description more easily to understand, the object coming close to the surface of the display is referred to as finger or pointing device, unless otherwise noted. Variations between the light falling onto one or several of the photo detectors and the respective values stored in the reference map are used to determine if a finger or pointing device is coming close to the surface of the display and if a selectable object displayed on the display. The reference map may be determined once the display is switched on, or may be calculated from average values of the light detectors. It is also conceivable to refresh the reference map in fixed or variable intervals. Measuring the incident light on the light detectors is performed continuously, thereby allowing for refreshing the differences between the reference map and the currently incident light. In this way it is possible to track a finger or a pointing device that is moving across the display. A selectable object displayed on the display is considered selected whenever the finger or pointing device rests in the respective position for a certain amount of time. It is also conceivable that only a double trigger results in the selection of a selectable object. In this case, it would be necessary to bring the finger or pointing device close to the surface of the display twice within a predetermined time interval.

In order to avoid unwanted selection of selectable objects displayed on the display, in one embodiment the speed of the variation in the amount of light falling onto one or groups of light detectors is taken into consideration. This may be done, e.g., by appropriate low pass filtering. In this case, very fast variations in the values detected by the light detectors may be ignored. In another development of the invention, very slow variations in the values detected by the light detectors are also ignored in order to take variations on the ambient conditions into consideration.

In order to increase the accuracy of selection of objects displayed on the display, another development of the method includes reproducing a distinguishable marker on the display corresponding to the position of the finger or pointing device. The position of the distinguishable marker is updated according to the incident light on the light detectors. In a development of this embodiment, when a double trigger is required for selecting, the marker is held on the position of the selectable object displayed on the screen for a predetermined time interval, and the second trigger is only accepted on this position during the predetermined time interval. This development further increases the accuracy of selection.

The invention will be described in greater detail in the following with regard to the drawing. In the drawing,
- Fig.1: shows a diagrammatic representation of a display element suitable for use with the inventive method;
- Fig. 2: shows a diagrammatic representation of a display according to a first operating mode of the inventive method; and
- Fig. 3: shows a diagrammatic representation of a display according to a second operating mode of the inventive method.

In the drawing, identical or similar elements are referenced with the same reference symbol.

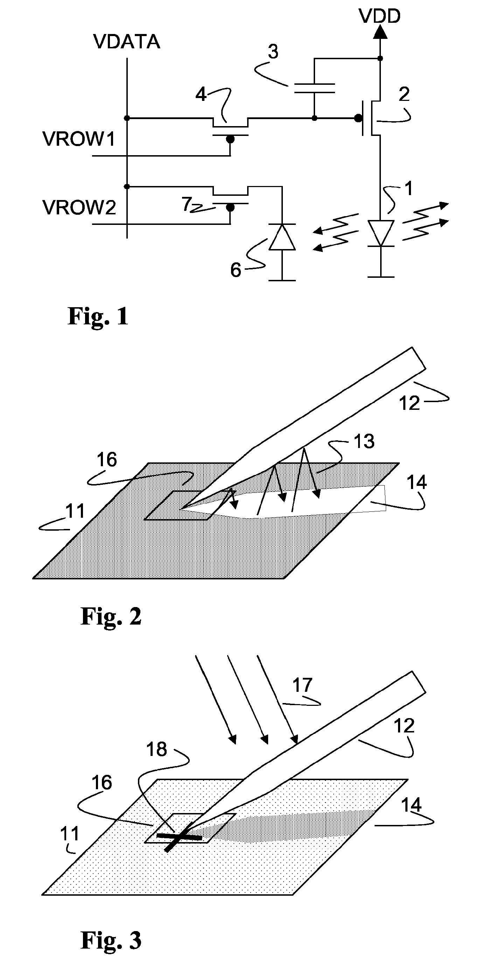

In Fig. 1 a diagrammatic representation of a display element suitable for use with the inventive method is shown. A light emitting display element 1, e.g. an OLED, is connected between ground GND and a supply voltage VDD via a control element 2. The control element is, in the case of an OLED, e.g. a FET that operates as a controllable resistance or as a controllable current source. The FET may be assigned a signal holding element 3, e.g. a capacitor. The control element 2 is controlled via a first control line VDATA, which is connected to the control electrode of the control element 2 via a switch 4. The switch 4, e.g. a FET switch, is activated for setting the desired control signal via a second control line VROW1. A light detecting element 6, e.g. a photodiode, is provided within the range of the light emitted by the display element 1. The light detecting element 6 may be assigned to a single light emitting display element 1, or to a group of display elements. The light emitted by an individual ort a group of display elements is measured by the light detecting element 6 and may also be used to control the light intensity that is set for the light emitting display element. In the figure this is done directly inside the pixel cell using the photo diode 6. The photo diode delivers a photocurrent that is evaluated and so the set data of the light emitting display element 1 can be correctly adjusted for each pixel or groups of pixels to provide a high precision video display having uniform brightness distribution. The photocurrent, or in general the signal delivered from the light detecting element 6 is coupled to a control circuit (not shown) via a connecting line. In the figure the connecting line is the first control line VDATA. The light detecting element 6 is connected to the first control line via a switch 7. Switch 7, e.g. a FET switch, is controlled via a third control line VROW 2. The timing of the switches in the case of the circuit shown in the figure has to be controlled between setting the control signal for the control element 2 and measuring the light detected by the light detecting element 6 in an appropriate manner. Basically, the additional part to a common TFT pixel cell is switch 7 and the light detecting element 6, e.g. the photo diode. In the figure the basic TFT circuitry is a 2 TFT p-Si AM pixel circuit with non-inverted OLED. It is to be noted that other TFT pixel circuits and other OLED positions (inverted, bottom or top emitting) are possible as well. The OLED may also be replaced by other light emitting elements, such as LEDs or the like. The circuit may also be used in an a-Si-based (amorphous silicon) display, provided that a suitable light detecting element is present.

In the method, firstly the desired control signal for the control element 2 is applied to the control line VDATA. The signal is applied to the control element via the then closed switch 4. Signal holding element 3 holds the signal constant after the programming is completed, whereby control element 2 provides the adjusted current to the light emitting element 1. After certain time required for settling the light emitting element 1 is emitting a steady light flux. This light flux, or a representative part thereof, is now measured by the light detecting element 6, in the figure represented by the photo diode, which is assigned to the same light emitting element 1 or a group of light emitting elements. The generated photo current flows whenever switch 7 is closed and a measurement reference voltage is connected to VDATA. The information may now be evaluated by a control circuit. The measurement can theoretically be performed simultaneously with programming the light emitting element. However, care has to be taken since the light emitting element may have a dynamic settling behaviour. A separated measurement time instant is preferred. In another embodiment, the photo current is amplified before measuring.

Whenever an object comes close to the surface of the display, light emitted by the light emitting elements is reflected back towards the light detecting means, changing the amount of light detected in a steady state. It is also possible that the display is located in a lit environment. In this case the ambient light creates a rather constant exposure of the individual light detecting means, and an object coming close to the surface of the display reduces the total amount of light received. In any case, the object creates a change in the received amount of light with reference to a steady state. This situation is shown in figures 2 and 3, respectively.

In Fig. 2 the light emitted by the display 11 is reflected back onto the surface and thus the light detecting elements 6 by the object 12. The area of an increased amount of light falling onto the surface is indicated by the flexed arrows 13 and the brighter shaded shape 14. In this case, the shape is pointed. This fact can be used to determine an object 16 reproduced on the display as being selected. For example, if the pointed side of the zone subject to an increased amount of light falling onto it is located within the selectable object reproduced on the display, this object is considered selected. Selection may be subject to further filtering, e.g. only if the pointed side is inside the area of the selectable object longer than a predetermined time, or the like. In any case, by appropriately evaluating the optical feedback from the light detecting elements, the shape of the object coming close to the surface may be determined and be used for selecting a selectable object.

In Fig. 3 a similar situation is shown. Here, the ambient light falling onto the display is represented by the arrows 17. The object 12 coming close to the surface of the display 11 casts a shadow, that results in a reduced amount of light falling onto the light detecting means of the display 11. As was possible in the situation explained with reference to Fig. 2, in this situation it is also possible to determine the shape of the zone 14 subject to reduced incident light. Also shown is a marker 18 that is reproduced by the display in the location where a predetermined part of the shadow of the object 12 coming close to the surface of the display is located. In this case, the predetermined part is the pointed tip, and the marker 18 is a bold-lined cross. The marker is moved as the zone 14 is moving, and thus the predetermined part of the zone 14 indicating the selection point. This advantageously allows for a user to better control the movement of the object 12

In order to determine the zone 14, firstly a reference map including the detected light values of all light detecting elements in the display 11 is created during a steady state. Changing amounts of light due to changing video contents of the display may be compensated for by taking the known or expected values of light due to these changes into consideration. The map may be created in fixed or variable intervals. It is also possible to create the map using the detected values from the light detecting elements from a number of past frames of video, or averaging the values for a certain time. The averaging may be made using weighted values of past measurements, for example reducing the influence of older measurement values by accordingly multiplying them with a weighting factor.

As soon as the most recent information, i.e. real time or almost real-time information, of the light detecting elements of the display is compared to the reference map, conventional methods for object or shape identification or recognition may be used to determine the shape of the zone 14 created by the object 12 coming close to the surface. The selection point may then be determined using conventional methods, too. The temporary differences between the reference map and the most recent information gathered by the light detecting elements in the display 11 may also be subject to filtering, either temporal or spatial, or both, prior to object or shape recognition.

As the location of all light detecting elements in the display is known, the detected shape can be mapped onto the displayed contents, thus enabling selecting objects displayed.

If the selectable objects are large enough, even pointing with a finger may suffice to select an object. The finger, too, reflects the emitted light back to the light detecting elements, or casts a shadow from the ambient light.

Although the invention was described with reference to OLED displays it is not limited to this type of displays. The invention may be used with any kind of display that is equipped with light detectors.

The invention may advantageously be used with public service terminals, e.g., ticket distribution machines or information terminals. As no further layers are applied on the surface of the display, the maximum light output of the display and thus the contrast is increased with regard to conventional touch-screens.

## Claims

1. Method for selecting objects displayed on a display, wherein the display includes pixels arranged in rows and columns for reproducing images of the objects, wherein light detecting means are provided with each one or groups of pixels, wherein the method includes the steps of:
- displaying selectable objects by accordingly controlling individual or groups of pixels;
- continuously detecting the incident light for each one of the light detecting means;
- determining a reference map of the incident light for one or groups of the light detecting means;
- detecting temporary differences from the reference map in the incident light for one or groups of the light detecting means;
- locating the detected temporary difference with reference to the position of the light detecting means;
- referring the located temporary difference to images of objects displayed on the display;
- interpreting the temporary difference referred to an object as selection of the object;
- issuing a signal indicating the selection of the object.

2. Method according to claim 1, wherein the reference map is determined by storing initial or average values.

3. Method according to claim 1, wherein the reference map is determined by low pass filtering subsequent samples of the continuously detected incident light for each one of the light detecting means.

4. Method according to one of the preceding claims, wherein a shape is determined from of the difference in the incident light for groups of light detecting means, and wherein a selected region of the shape is interpreted as focus point.

5. Method according to claim 4, wherein a pointed side or the centre of the shape is the focus point.

6. Method according to claim 4 or 5, wherein the position of the focus point is displayed on the display.

7. Display including means for performing the method according to one of the preceding claims.
